# FASCICULE DE BREVET EUROPEEN

(11) **EP 1 585 591 B1**
(45) Date de publication et mention de la délivrance du brevet: **04.06.2008**
(21) Numéro de dépôt: 03815953.9
(22) Date de dépôt: 17.12.2003
(51) Int. Cl.: B01F 15/00, B01J 19/02

(54) **REACTEUR EMAILLE A BRISE-LAMES SOLIDARISES A DISTANCE DE LA PAROI INTERNE DU REACTEUR EMAILLE PAR UN RACCORDEMENT LOCAL.**
EMAILLIERTER REAKTOR MIT DURCH EINE LOKALE VERBINDUNG IN EINEM ABSTAND VON DER INNENWAND DES EMAILLIERTEN REAKTORS BEFESTIGTEN PRALLFLÄCHEN
ENAMELLED REACTOR WITH BAFFLES FIXED AT A SEPARATION FROM THE INTERNAL WALL OF ENAMELLED REACTOR BY MEANS OF A LOCAL CONNECTION

(30) Priorité: 21.01.2003 FR 0300607
(43) Date de publication de la demande: 19.10.2005
(73) Titulaire: DE DIETRICH, 67110 Niederbronn-les-Bains (FR)
(72) Inventeur: SCHMIDT, Rémy, F-67340 Offwiller (FR)
(74) Mandataire: Metz, Paul
(86) Numéro de dépôt international: PCT/FR2003/003772
(87) Numéro de publication internationale: WO 2004/073847

(56) Documents cités:
- EP-A- 1 172 138
- EP-A- 1 208 905
- DE-A- 19 723 977
- US-A- 3 130 015

## Description

La présente invention concerne un brise-lames solidarisé, de préférence par soudage, à la paroi d'un contenant émaillé ou vitrifié, au niveau d'un raccordement local.

Dans l'industrie chimique, on doit parfois employer ou stocker des réactifs ou des produits particulièrement acides ou corrosifs qui rendent impossible l'utilisation de contenants classiques dont les parois en acier seraient attaquées et détériorées.

Une solution consiste à utiliser dans ce cas des réacteurs ou autres contenants dont la paroi interne est revêtue d'une couche protectrice en émail. Ce revêtement inerte et très résistant assure la protection du réacteur ou contenant contre les agressions du contenu.

Cependant, afin d'éviter tout risque de détérioration du contenant et tout risque de fuites pouvant se révéler dangereuses pour les hommes, le matériel et l'environnement, l'intégrité de ce revêtement protecteur émaillé doit être assurée à tout moment.

L'intégrité de ce revêtement protecteur émaillé dépend étroitement de la géométrie interne du contenant et de ses éléments intérieurs. Ainsi, les zones anguleuses, très difficiles à émailler, doivent être évitées. Au contraire, les surfaces lisses et courbes sont privilégiées.

Une brusque variation de température, que ce soit du côté émail ou du côté acier, peut conduire à la destruction du revêtement émaillé par choc thermique. Les chocs thermiques les plus dangereux sont causés par des projections de produits froids sur une surface émaillée chaude.

En outre, au cours du processus d'émaillage, les surfaces traitées subissent généralement des traitements thermiques par chauffage à une température de 700 à 850°C, ce qui entraîne des dilatations thermiques importantes. De telles dilatations thermiques provoquent des tensions qui peuvent détériorer la couche protectrice en émail.

Par ailleurs, il est souvent nécessaire dans l'industrie chimique d'effectuer une agitation de la matière présente dans le contenant. Cette agitation est généralement effectuée à l'aide d'un agitateur et elle peut être associée à un ou plusieurs brise-lames.

De manière classique, les réacteurs équipés d'un agitateur comportent un ou plusieurs brise-lames introduit(s) par une ouverture du réacteur. Plus rarement, les brise-lames peuvent être solidarisés sur toute leur longueur à la surface interne du réacteur.

Un brise-lames est un dispositif de contre agitation permettant une meilleure agitation, notamment en créant des turbulences supplémentaires dans le milieu agité et en empêchant la formation d'un tourbillon ou vortex.

Dans le cas de dispositifs soudés à l'intérieur du réacteur et destinés à être émaillés, l'ampleur des contraintes est accrue en raison des dilatations thermiques si ces dispositifs sont soudés sur une grande longueur ou sur toute leur périphérie contre la paroi interne du réacteur.

Le but de l'invention est de fournir un brise-lames solidarisé à la surface interne d'un contenant émaillé de sorte que la phase d'émaillage puisse être mise en oeuvre de manière aisée, efficace, et fiable et que la couche de revêtement soit uniforme, solide et durable.

Selon l'art antérieur constitué par exemple par le brevet US n° 7,172,877 au nom de Robert H. SCHWAIG, un brise-lames de faible profondeur peut être réalisé par bossage de la paroi interne du contenant vers l'intérieur de celui-ci ou par soudage d'une pièce rapportée contre cette paroi. Il est prévu que ce brise-lames puisse être creux et raccordé avec l'éventuelle double enveloppe du contenant afin, par exemple, de permettre la circulation d'un liquide chauffant ou réfrigérant dans le corps du brise-lames.

La formation du brise-lames par bossage, ne permet pas d'assurer un émaillage aisé et de qualité et s'oppose à la réalisation de formes complexes pour le brise-lames. De plus, ce procédé de fabrication affaiblit la partie déformée en l'amincissant et ne permet pas de réaliser un brise-lames présentant une surface importante sans en réduire la solidité de manière critique.

Selon le second mode de réalisation du brise-lames du brevet SCHWAIG, le brise-lames est formé d'une plaque métallique dont les bords sont repliés et soudés contre la paroi interne du contenant sur toute la périphérie ou hauteur du brise-lames.

Cependant, les présents inventeurs ont constaté qu'une telle soudure, de par sa longueur importante, s'étendant sur toute sa périphérie ou hauteur est difficile à émailler.

En effet, les tensions mécaniques occasionnées par la dilatation thermique du brise-lames sont accrues par la grande longueur de celui-ci et peuvent entraîner une grave détérioration du revêtement émaillé.

En outre, avec un brise-lames soudé sur toute sa périphérie ou hauteur, la conduite du processus de fabrication industrielle est très difficile. Les résultats sont aléatoires et le procédé n'est pas reproductible en cadence industrielle.

Pour ces différentes raisons, les solutions divulguées dans le brevet US n° 7,172,877 ne sont pas satisfaisantes.

Le brevet BIAZZI EP-A-1 172 138 décrit un réacteur formé d'une cuve, d'un couvercle entre lesquels s'intercale une pièce-support annulaire portant un dispositif échangeur de chaleur pour lequel se pose un problème d'émaillage. La pièce support annulaire portant les échangeurs étant indépendante du contenant.

Le brevet DU PONT DE NEMOURS EP-A-1 208 905 concerne l'optimisation de l'agitation d'un milieu formé de particules solides en suspension à l'aide de brise-lames qui ne sont pas solidarisés à la paroi interne du contenant.

Le but de la présente invention est donc de fournir un réacteur émaillé à brise-lames selon la revendication 1 de taille et de forme quelconque pouvant être solidarisé sur la surface interne d'un contenant, l'ensemble pouvant ensuite être émaillé de manière simple, efficace, fiable et durable.

Préférentiellement, selon la présente invention le brise-lames peut être plein ou creux et en communication avec une éventuelle double enveloppe du contenant.

Par contenant, il faut comprendre tout conteneur destiné à renfermer des liquides, des gaz, des matières pulvérulentes, solides, pâteuses ou visqueuses ou des mélanges de ceux-ci, susceptible d'être équipé d'un brise-lames : réacteur, cuve, citerne, colonne, sécheur, échangeur ou autre.

Dans le cadre de l'invention, il ne sera question que des contenants émaillés.

L'utilisation la plus courante des brise-lames s'effectuant avec les réacteurs, ce terme sera utilisé pour désigner le contenant, même s'il peut s'agir de tout autre contenant.

Pour résoudre ce problème technique de fabrication, l'objet de la présente invention consiste à prévoir un brise-lames solidarisé à distance de la paroi interne en regard du contenant et solidarisé localement à cette paroi par l'intermédiaire d'au moins un raccordement local.

Le brise-lames reste alors quasiment insensible aux dilatations du reste du contenant car une dilatation différente entre le brise-lames et la paroi est permise.

Ainsi, dans la présente invention, au lieu de solidariser le brise-lames sur toute sa longueur contre la paroi interne du contenant, on préfère le solidariser uniquement au niveau d'un raccordement local.

Par raccordement local, on entend un raccordement dont l'étendue est limitée, c'est-à-dire un raccordement ne s'étendant pas sur toute la hauteur du brise-lames et dont la largeur est donc inférieure à la longueur du brise-lames.

De la sorte, la majeure partie du brise-lames reste libre et peut se déformer, se dilater librement sans influencer, ni être influencée par le reste du contenant notamment au cours des cycles thermiques d'émaillage.

De plus, dans le cas préféré où la solidarisation se fait par soudage, le cordon de soudure est d'une longueur réduite, ce qui évite les inconvénients précités de l'art antérieur.

Enfin, la présente invention permet tout à fait au brise-lames d'être plein ou creux.

Lorsque le brise-lames est creux, son espace intérieur peut alors être mis en communication fluidique, au niveau de son raccordement local, avec un système de circulation de fluide caloporteur, chauffant ou réfrigérant, pouvant équiper le contenant, ce système consistant par exemple en une double enveloppe, un serpentin, une demi-coquille ou autre. Un moyen adapté peut être prévu pour la circulation du fluide dans le brise-lames.

Pour ces nombreuses raisons, le dispositif de la présente invention satisfait à tous les objectifs précités sans présenter le moindre inconvénient. Il s'agit donc d'un dispositif idéal totalement nouveau qui permet de prévoir un ou plusieurs brise-lames dans un contenant émaillé tout en assurant un revêtement émaillé prévu de manière aisée, efficace et durable de l'ensemble.

De par sa conception, excepté au niveau de son raccordement local, il existe un espacement situé entre le corps du brise-lames et la paroi intérieure du contenant à laquelle il est soudé. Cet espacement permet la libre circulation de la matière présente dans le contenant entre le brise-lames et la paroi intérieure du contenant, excepté au niveau du raccordement local du brise-lames, ce qui facilite considérablement le nettoyage de l'ensemble.

Cet espacement évite également un inconvénient que l'on retrouve habituellement dans les contenants équipés de brise-lames tels que celui du brevet US n° 7,172,877 en ce qu'aucune accumulation de matière ne se crée dans l'angle formé entre le flanc du brise-lames et la surface intérieure du contenant à laquelle il est soudé. Cette accumulation qui s'opère ordinairement du côté opposé au flux d'agitation est évitée dans la présente invention par l'écoulement permanent entre le contenant et le brise-lames.

Enfin, de par sa conformation particulièrement avantageuse, le brise-lames selon l'invention augmente les performances hydrauliques de l'agitateur et réduit les temps de mélange et d'homogénéisation, ce qui entraîne un gain de temps et réduit les coûts pour l'industrie.

D'autres caractéristiques et avantages de l'invention apparaîtront à la lecture de la description détaillée qui va suivre, description faite en référence aux dessins annexés, dans lesquels :
- la figure 1 est une vue en coupe verticale d'un réacteur à double enveloppe équipé d'un agitateur et de deux brise-lames selon l'invention, pleins et en vis-à-vis ;
- la figure 2 est une vue en coupe verticale d'un réacteur à double enveloppe équipé d'un agitateur et de deux brise-lames selon l'invention, ceux-ci étant en vis-à-vis, creux et en communication fluidique avec la double enveloppe du réacteur ;
- la figure 3 est une vue en coupe verticale d'un réacteur à serpentin équipé d'un agitateur et de deux brise-lames en vis-à-vis selon une variante de l'invention ;
- la figure 4 est une vue en coupe verticale d'un réacteur à double enveloppe équipé d'un agitateur et de deux paires de brise-lames en vis-à-vis selon une autre variante de l'invention ;
- la figure 5 est une vue en coupe verticale d'un réacteur à double enveloppe équipé d'un agitateur et de deux paires de brise-lames en vis-à-vis selon une autre variante de l'invention ;
- la figure 6 est une vue en coupe verticale d'un réacteur à double enveloppe équipé d'un agitateur et de deux paires de brise-lames en vis-à-vis selon une autre variante de l'invention ;
- les figures 7 à 15 sont des vues schématiques partielles en coupe horizontale d'un réacteur équipé d'un brise-lames selon l'invention présentant diverses formes de section ;
- la figure 16 est une vue schématique en coupe horizontale d'un réacteur équipé de six brise-lames selon une variante de l'invention ;
- la figure 17 est une vue en coupe transversale d'un réacteur horizontal équipé de deux brise-lames selon des variantes de l'invention ;
- la figure 18 est une vue schématique en coupe horizontale de l'écoulement du fluide au niveau d'un brise-lames selon l'art antérieur du brevet US n° 7,172,877 ; et
- la figure 19 est une vue schématique en coupe horizontale de l'écoulement du fluide au niveau d'un brise-lames selon l'invention.

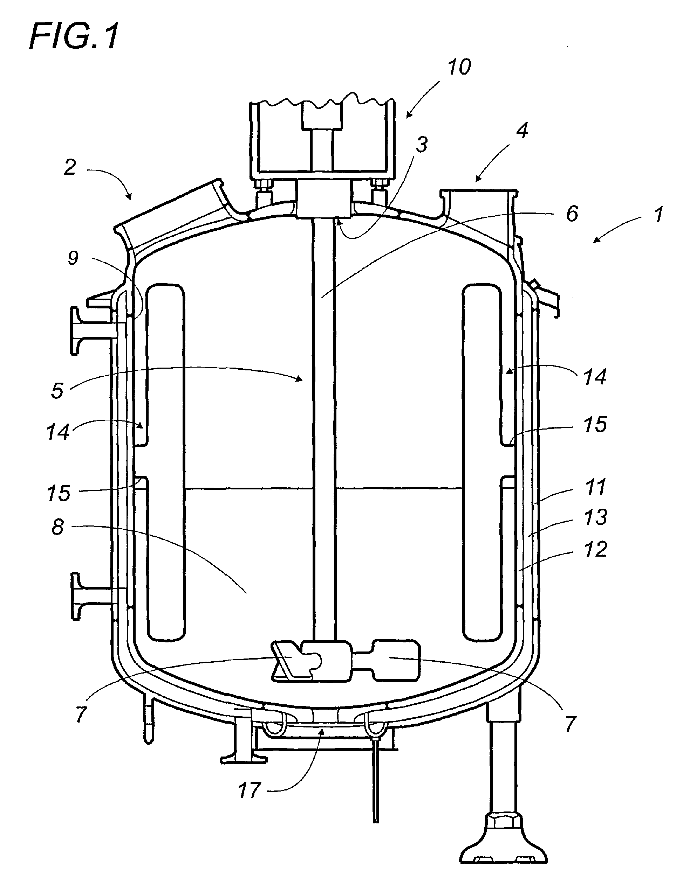

La figure 1 représente un réacteur chimique 1 percé de trois ouvertures supérieures 2, 3 et 4 pouvant servir à introduire les différents réactifs, solvants et catalyseurs ou à plonger divers instruments ou accessoires (agitateur, sondes, organes de prélèvement, etc.) dans le réacteur 1.

Le réacteur 1 est équipé d'un agitateur mécanique 5 dont la tige 6 traverse l'ouverture centrale 3 et plonge vers la partie inférieure du réacteur. La tige 3 se termine par exemple par un rotor à trois pales inclinées 7, brassant le contenu 8 du réacteur 1 lorsque la tige est entraînée en rotation par un dispositif d'entraînement 10 disposé à l'extérieur du réacteur.

Afin de pouvoir résister aux agressions d'un milieu réactionnel très corrosif formant le contenu 8 du réacteur 1, la surface interne du réacteur peut être entièrement revêtue d'une couche protectrice émaillée 9 également appelée vitrifiée. De la même façon, toutes les surfaces pouvant se retrouver en contact avec le contenu 8 doivent également être émaillées. C'est évidemment le cas de la tige 6 et des pales 7 de l'agitateur 5.

Une deuxième paroi 11 entoure la paroi interne 12 du réacteur 1 à une certaine distance de celle-ci de manière à ménager entre ces deux parois un espace fermé 13. Cet espace 13 est destiné à recevoir un fluide caloporteur chaud ou froid afin de réguler la température interne du réacteur selon le principe bien connu de la double enveloppe.

Sur cette figure, le réacteur 1 comporte plusieurs brise-lames 14 selon l'invention, solidaires de la paroi interne 12 en regard du réacteur 1 à distance de celle-ci et soudés localement sur cette paroi 12 au niveau d'un raccordement local 15 dont la largeur est inférieure à la longueur du brise-lames.

Enfin, dans sa partie inférieure, le réacteur 1 est percé d'une ouverture 17 pouvant servir d'orifice de vidange.

Dans ce premier mode de réalisation, les brise-lames 14 sont pleins. Leurs raccordements locaux 15 se trouvent sensiblement à mi-hauteur de chaque brise-lames 14. Les brise-lames présentent une forme générale simple, semblable à une planche sensiblement verticale et perpendiculaire à la paroi interne 12 du réacteur 1, dont les angles sont arrondis.

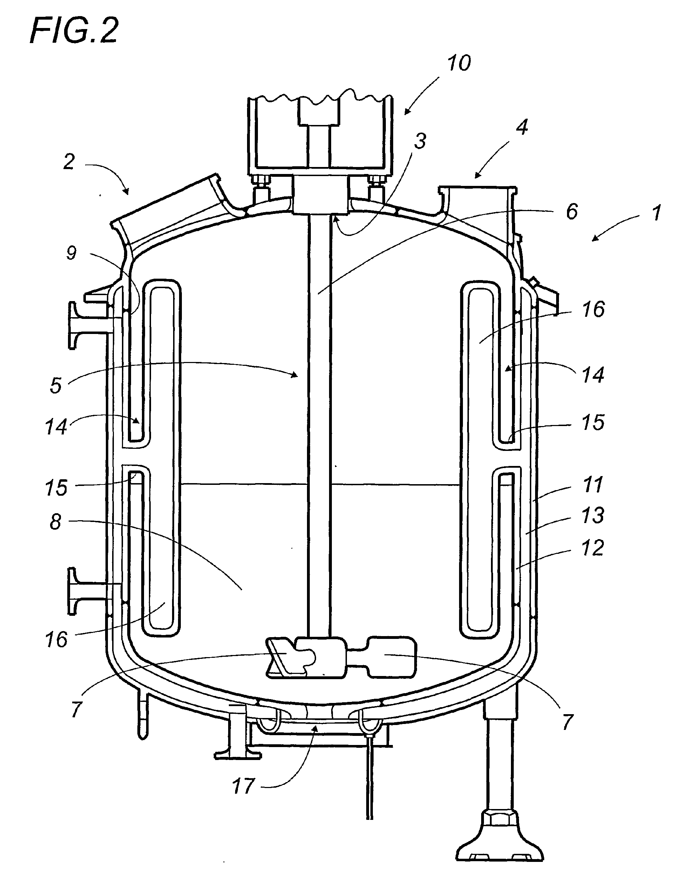

Dans un second mode de réalisation représenté sur la figure 2, un réacteur 1 semblable à celui de la figure 1 est équipé de plusieurs brise-lames 14 placés à distance de la paroi interne 12 du réacteur 1 et soudés contre celle-ci par l'intermédiaire d'un raccordement local 15.

Selon ce mode de réalisation, les brise-lames 14 selon l'invention sont creux et renferment un espace intérieur creux 16 qui peut éventuellement être mis en communication fluidique avec l'espace fermé 13 de la double enveloppe compris entre la paroi externe 11 et la paroi interne 12 du réacteur 1.

De cette façon, le fluide caloporteur circulant dans la double enveloppe du réacteur 1 peut également circuler dans les brise-lames 14, ce qui améliore considérablement les caractéristiques d'échange thermique de l'ensemble.

Une mise en communication similaire de l'espace intérieur creux 16 avec le fluide caloporteur peut être réalisée de la même façon lorsque le réacteur est équipé d'un serpentin, de demi-coquilles ou de tout autre système analogue.

Dans les deux modes de réalisation précédents représentés sur les figures 1 et 2, les brise-lames présentent une forme générale simple et classique. Le brise-lames selon l'invention, par sa conception avantageuse, peut avantageusement adopter des formes générales plus complexes et variées. Il peut ainsi s'adapter aux contraintes et aux caractéristiques techniques particulières de chaque situation pratique envisagée et conférer des avantages supplémentaires.

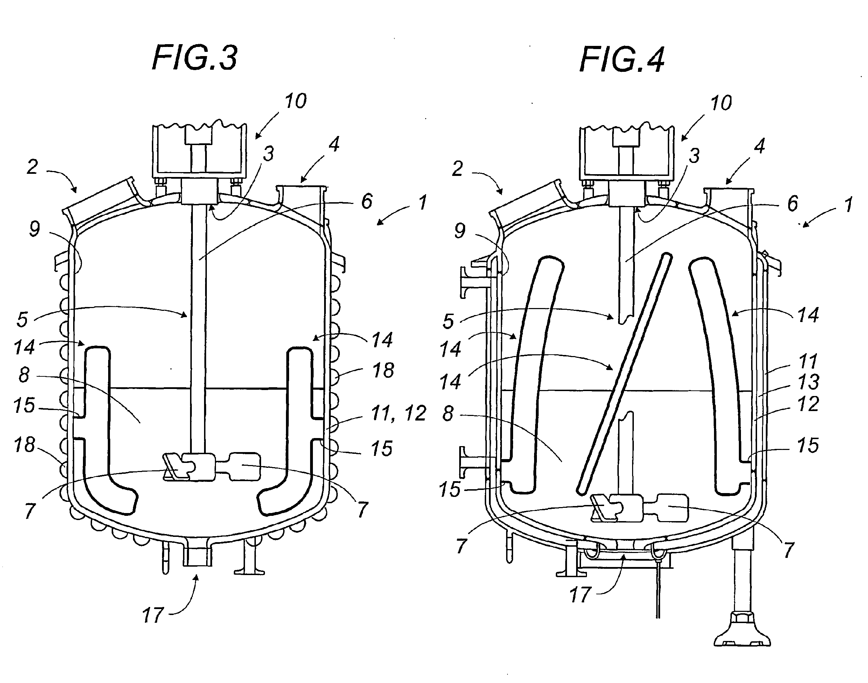

Ainsi, le brise-lames selon l'invention peut par exemple être incurvé au niveau de sa partie inférieure. Il peut ainsi adopter une forme en "crosse de hockey", comme représenté sur la figure 3 où il équipe un réacteur à serpentin ou à demi-coquille. Une telle forme générale du brise-lames permet par exemple d'établir une contre agitation dans le fond du réacteur.

Bien évidemment, le brise-lames selon l'invention peut être incurvé, bombé ou en arc à un autre niveau et par exemple en partie supérieure comme représenté sur la figure 4.

En outre, le raccordement local 15 n'est pas nécessairement situé à mi-hauteur du brise-lames, mais peut être positionné à une hauteur quelconque. Ainsi, par exemple sur le mode de réalisation de la figure 4, il peut être situé à proximité du bord inférieur du brise-lames 14.

Dans le cas de la variante représentée sur cette figure 4, on peut constater que les brise-lames selon l'invention peuvent également être solidarisés inclinés, c'est-à-dire positionnés en regard de la paroi du réacteur en formant un angle quelconque par rapport à la verticale.

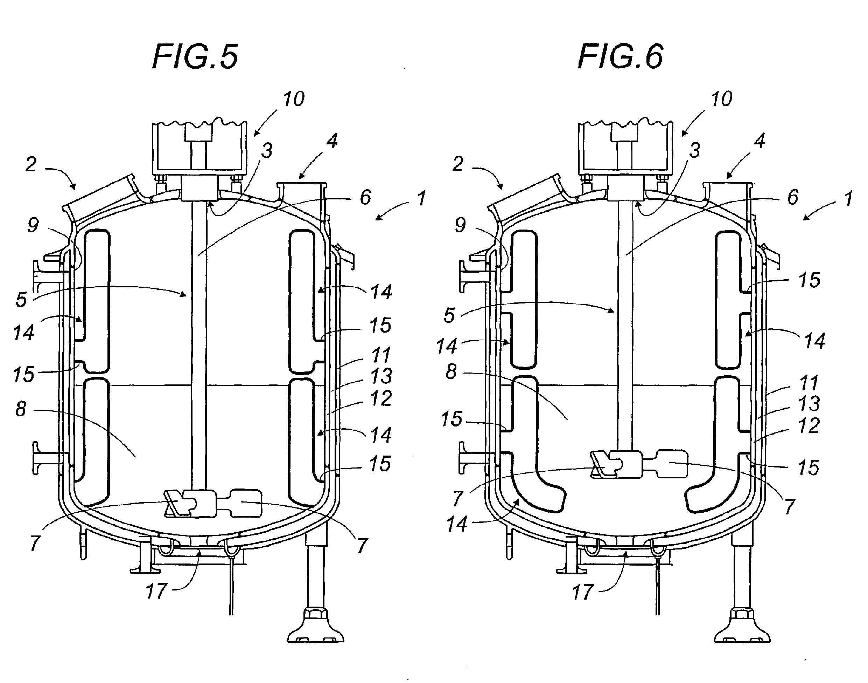

Comme représenté sur les figures 5 et 6, il est également possible de combiner des brise-lames par paires pour obtenir l'équivalent d'un brise-lames de grande longueur. On peut remarquer sur ces figures que les brise-lames formant chaque paire ne sont pas obligatoirement identiques. On peut bien évidemment envisager de combiner des brises lames en nombre supérieur à deux.

L'utilisation de plusieurs brise-lames combinés par deux ou plus permet par exemple de diminuer les coûts en fabriquant plusieurs brise-lames de formes diverses et de petite taille, pouvant ensuite être utilisés de manière modulable pour s'adapter aux différents réacteurs.

En outre, si les brise-lames peuvent adopter différentes formes générales, ils peuvent aussi présenter différentes hauteur, largeur et épaisseur afin de s'adapter à la conformation et aux exigences du réacteur.

Ils peuvent également offrir différentes formes de section pour créer des effets recherchés de mécanique des fluides.

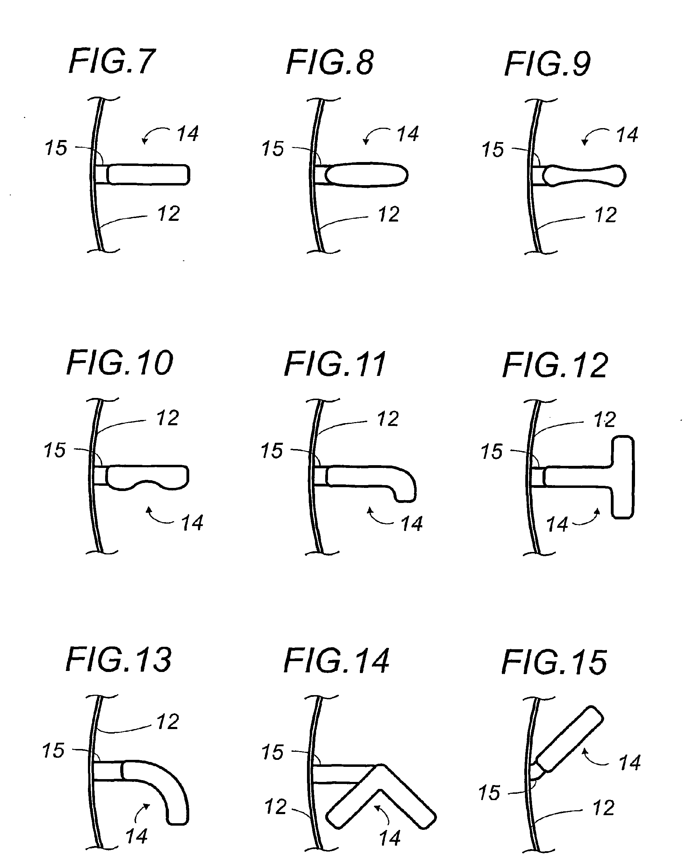

Sur les figures 7 à 15, quelques exemples de formes de section pouvant être adoptées par les brise-lames 14 ont été représentés. Ces formes de section peuvent être rencontrées aussi bien avec des brise-lames pleins qu'avec des brise-lames creux.

Sur la figure 7, on a représenté un brise-lames 14 présentant une section de forme classique, de type sensiblement rectangulaire à bords arrondis.

La figure 8 représente un brise-lames 14 ayant une section à flancs bombés convexes, tandis que sur la figure 9 ces mêmes flancs bombés sont concaves.

La figure 10 représente un brise-lames 14 dont la section présente des ondulations sur l'un des flancs. De la même façon, on peut envisager que la section du brise-lames 14 présente un nombre quelconque d'ondulations sur un ou plusieurs de ses flancs.

La figure 11 représente une section de brise-lames 14 à extrémité latérale courbée.

La figure 12 représente un brise-lames 14 ayant une section en forme de T.

La figure 13 représente un brise-lames 14 dont la section est en forme de quart d'anneau.

La figure 14 représente un brise-lames 14 présentant une section en forme de V.

Enfin, les brise-lames 14 peuvent également être solidarisé de manière non perpendiculaire à la paroi du réacteur comme représenté sur la figure 15.

Les figures 7 à 15 ne sont données qu'à titre d'exemple et l'homme du métier pourra aisément envisager d'autres formes de section pour le brise-lames, en variant ses dimensions, sa concavité ou sa convexité, son orientation, son inclinaison, sa zone de solidarisation, etc.

Comme déjà mentionné plus haut, un contenant peut être équipé d'un ou de plusieurs brise-lames 14. Selon un mode de réalisation préférentiel de l'invention, un contenant peut être équipé de plusieurs brise-lames 14 répartis régulièrement et/ou disposés sensiblement le long d'une courbe théorique, par exemple en forme d'hélice, inscrite sur la paroi interne 12 du réacteur 1.

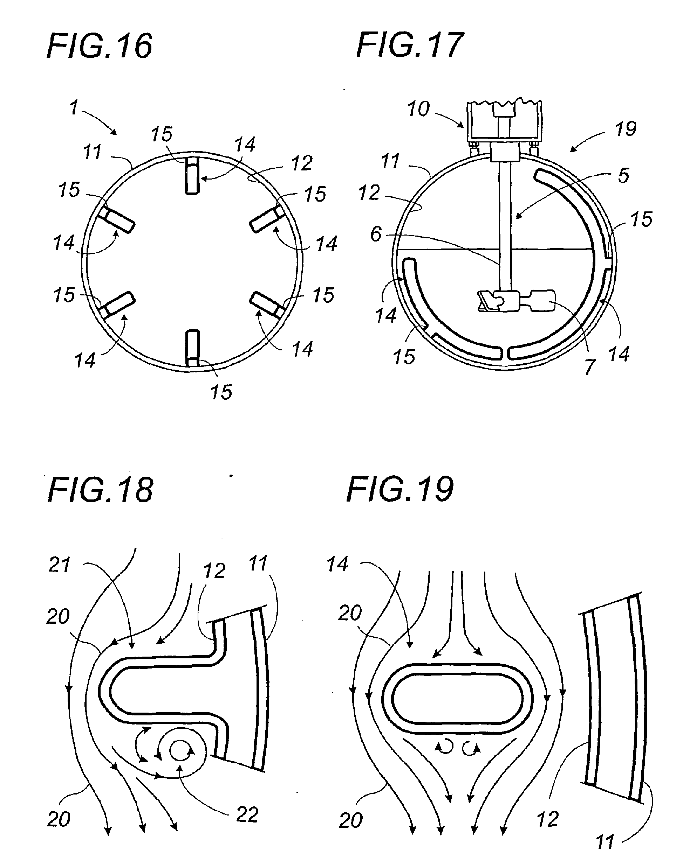

La figure 16 représente une vue schématique en coupe horizontale d'un réacteur 1 équipé de six brise-lames 14 présentant une forme de section classique, de type sensiblement rectangulaire à bords arrondis, répartis régulièrement sur la paroi interne 12 du réacteur, c'est-à-dire avec un espacement angulaire relatif sensiblement constant, par exemple d'environ 60° dans ce cas de figure.

La figure 17 représente une vue en coupe transversale d'un réacteur horizontal 19 équipé de deux brise-lames de formes différentes. Le premier est en forme de quart d'anneau tandis que le deuxième est en forme de demi-anneau.

La figure 18 représente une vue schématique en coupe horizontale de l'écoulement du fluide 20 au niveau d'un brise-lames selon l'art antérieur 21 qui est positionné contre la paroi interne 12 du réacteur 1 et solidarisé à celle-ci sur toute sa hauteur. Avec un tel brise-lames, une accumulation de matière sous la forme d'un dépôt est possible en raison d'une stagnation du fluide au niveau d'une zone d'angle mort 22 qui n'est pas suffisamment traversée par le fluide.

A titre de comparaison, la figure 19 représente une vue schématique en coupe horizontale de l'écoulement du fluide 20 au niveau d'un brise-lames selon l'invention 14, solidarisé à distance de la paroi du réacteur. Avantageusement, toute accumulation de matière en forme de dépôt est évitée en raison de la circulation du fluide 20 de part et d'autre du brise-lames.

Selon un autre mode de réalisation non représenté, on peut équiper un réacteur 1 de plusieurs brise-lames 14 disposés le long d'une courbe théorique formant une hélice sur la paroi interne 12 du réacteur ou présentant sensiblement eux-mêmes une forme d'hélice.

Dans ce cas, les brise-lames peuvent suivre l'orientation générale de l'hélice ou être orientés différemment tandis que leur position continue à sensiblement suivre l'hélice.

On peut également envisager que les brise-lames 14 soient disposés sensiblement le long d'une courbe théorique de type différent ou bien le long de plusieurs de ces courbes.

Enfin, il peut en outre être envisagé d'employer plusieurs raccordements locaux pour fixer le brise-lames contre la paroi interne du contenant si nécessaire pour des raisons de résistance ou autre.

Le dispositif de brise-lames selon l'invention est particulièrement bien adapté pour être réalisé dans la paroi d'un réacteur tel que représenté sur les figures. Cependant, il doit être bien compris que son utilisation n'est pas limitée à cette application.

Ce dispositif de brise-lames peut ainsi être ménagé contre la paroi d'un contenant quelconque, émaillé ou non, à simple ou double enveloppe, à serpentin entourant la paroi interne ou non, et comportant un nombre quelconque d'orifices quels que soient ses aménagements et son moyen d'agitation.

De la même façon, le brise-lames selon l'invention n'est pas forcément installé sur un réacteur chimique, mais peut être utilisé sur tout type de contenant pour lequel il est utile de réaliser une contre agitation.

Evidemment, le nombre, la forme générale, la forme de section, l'inclinaison, l'orientation et la disposition des différents brise-lames selon l'invention représentés sur les figures ne sont donnés ici qu'à titre illustratif et ne sont en aucun cas limitatifs.

De nombreuses variantes peuvent être imaginées pour le brise-lames selon la présente invention sans s'écarter du cadre de celle-ci. Ces variantes seront évidentes pour l'homme du métier, qui pourra notamment envisager d'autres nombres, formes générales, formes de section, inclinaisons, orientations et/ou dispositions pour le ou les brise-lames sans sortir de la portée des revendications.

## Revendications

1. Réacteur émaillé à au moins un brise-lames solidarisé à la paroi interne émaillée du réacteur pouvant être équipé d'un système de circulation de fluide caloporteur, **caractérisé en ce que** chaque brise-lames est relié à la paroi interne (12) du réacteur à distance de celle-ci par l'intermédiaire d'un raccordement local de liaison (15) ayant sa plus grande dimension inférieure à la longueur de chaque brise-lames et **en ce que** la surface extérieure du corps du brise-lames et celle de son raccordement sont émaillées, ce raccordement local de liaison rendant chaque brise-lames quasiment insensible aux dilatations du reste du contenant et formant avec la surface latérale interne du contenant un ensemble de surfaces émaillées.

2. Réacteur selon la revendication 1, **caractérisé en ce que** le raccordement local de liaison (15) est réalisé par soudage à la paroi interne (12).

3. Réacteur selon la revendication 1 ou 2, **caractérisé en ce qu'**au moins un des brise-lames est un corps creux.

4. Réacteur selon la revendication précédente, **caractérisé en ce que** l'espace intérieur creux (16) du brise-lames (14) est en communication fluidique, par l'intermédiaire de son raccordement local (15), avec le fluide du système de chauffage ou de rafraîchissement du contenant par circulation de fluide.

5. Réacteur selon l'une quelconque des revendications 1 ou 2, **caractérisé en ce qu'**au moins un brise-lames est un corps plein.

6. Réacteur selon l'une quelconque des revendications précédentes, **caractérisé en ce que** l'au moins un raccordement local de liaison (15) est situé sensiblement à mi-hauteur du brise-lames (14).

7. Réacteur selon l'une quelconque des revendications 1 à 6, **caractérisé en ce que** l'au moins un raccordement local de liaison (15) est situé à proximité d'un des bords d'extrémité du brise-lames (14).

8. Réacteur selon l'une quelconque des revendications précédentes, **caractérisé en ce que** le corps du brise-lames présente une forme générale plate semblable, à une planche sensiblement verticale et perpendiculaire à la paroi interne (12) du contenant (1), dont les angles sont arrondis.

9. Réacteur selon l'une quelconque des revendications 1 à 7, **caractérisé en ce que** le corps d'au moins un brise-lames affecte une forme générale en "crosse de hockey".

10. Réacteur selon l'une quelconque des revendications 1 à 7, **caractérisé en ce que** le corps d'au moins un brise-lames est incurvé, au niveau de sa partie supérieure, inférieure et/ou de son extrémité latérale.

11. Réacteur selon l'une quelconque des revendications précédentes, **caractérisé en ce que** la forme de la section transversale du corps d'au moins un brise-lames est sensiblement rectangulaire et à bords arrondis.

12. Réacteur selon l'une quelconque des revendications 1 à 10, **caractérisé en ce que** le corps d'au moins un brise-lames présente des flancs bombés convexes.

13. Réacteur selon l'une quelconque des revendications 1 à 10, **caractérisé en ce que** le corps d'au moins un brise-lames présente des flancs bombés concaves.

14. Réacteur selon l'une quelconque des revendications 1 à 10, **caractérisé en ce que** la forme de la section du corps d'au moins un brise-lames présente au moins une ondulation sur l'un de ses flancs.

15. Réacteur selon l'une quelconque des revendications précédentes, **caractérisé en ce que** le corps d'au moins un brise-lames est solidarisé à la paroi adjacente en présentation sensiblement inclinée par rapport à l'axe longitudinal du contenant.

16. Réacteur selon l'une quelconque des revendications précédentes, **caractérisé en ce que** le corps d'au moins un brise-lames est solidarisé en biais par rapport à la paroi interne (12) du contenant (1).

17. Réacteur selon la revendication précédente **caractérisé en ce qu'**une extrémité du corps de chaque brise-lames est proche de la paroi latérale adjacente et **en ce que** son extrémité opposée est éloignée de la paroi latérale adjacente.

18. Contenant destiné à être émaillé, **caractérisé en ce qu'**il comprend au moins un brise-lames émaillé relié à la paroi interne selon l'une quelconque des revendications précédentes.

19. Contenant selon la revendication précédente, **caractérisé en ce qu'**il comprend plusieurs brise-lames (14) répartis régulièrement.

20. Contenant selon la revendication 18 ou 19, **caractérisé en ce qu'**il comprend plusieurs brise-lames (14) disposés sensiblement le long d'une courbe théorique inscrite sur la paroi interne (12) du contenant (1).

21. Contenant selon la revendication précédente, **caractérisé en ce que** la courbe théorique est une hélice.

## Claims

1. Glass-lined reactor with one or more baffles secured to the internal glass-lined wall of the reactor capable of being equipped with a coolant circulation system, **characterized in that** each baffle is connected to the reactor internal wall (12), at a distance from said wall, by means of a local connection (15) whose greatest dimension is lower than the length of each baffle and **in that** the external surface of the baffle body and its connection are glass-lined, this local connection enables each baffle to be almost insensitive to the expansion of the rest of the container and forms a group of glass-lined surfaces with the internal lateral surface of the container.

2. Reactor according to claim 1, **characterized in that** the local connection (15) is formed by welding to the internal wall (12).

3. Reactor according to claim 1 or 2, **characterized in that** at least one baffle is a hollow body.

4. Reactor according to the preceding claim, **characterized in that** the inner hollow space (16) of the baffle (14) is in fluid communication, via its local connection (15), with the container's heating or cooling system fluid by fluid circulation.

5. Reactor according to any of claims 1 or 2, **characterized in that** at least one baffle is a solid body.

6. Reactor according to any of the preceding claims, **characterized in that** the at least one local connection (15) is located substantially at mid-height of the baffle (14).

7. Reactor according to any of claims 1 to 6, **characterized in that** the at least one local connection (15) is located close to one of the edges of the ends of the baffle (14).

8. Reactor according to any of the preceding claims, **characterized in that** the body of the baffle exhibits a generally flat form similar to a board mainly vertical and perpendicular to the internal wall (12) of the container (1) with rounded angles.

9. Reactor according to any of claims 1 to 7, **characterized in that** the body of at least one baffle takes the general shape of a "hockey stick".

10. Reactor according to any of claims 1 to 7, **characterized in that** the body of at least one baffle is curved, at its vertically higher or lower part and/or on its side edge.

11. Reactor according to any of the preceding claims, **characterized in that** the form of the cross section of the body of at least one baffle is mainly rectangular and has rounded edges.

12. Reactor according to any of claims 1 to 10, **characterized in that** the body of at least one baffle exhibits convex rounded sides.

13. Reactor according to any of claims 1 to 10, **characterized in that** the body of at least one baffle exhibits concave rounded sides.

14. Reactor according to any of claims 1 to 10, **characterized in that** the form of the body section of at least one baffle presents at least an undulation on one of its sides.

15. Reactor according to any of the preceding claims, **characterized in that** the body of at least one baffle is secured to the adjacent wall in an appreciably tilted presentation compared to the longitudinal axis of the container.

16. Reactor according to any of the preceding claims, **characterized in that** the body of at least one baffle is secured in skew relative to the internal wall (12) of the container (1).

17. Reactor according to the preceding claim **characterized in that** one end of the body of each baffle is close to the adjacent sidewall and **in that** its opposite end is further away from the adjacent sidewall.

18. Container intended to be glass-lined, **characterized in that** it includes at least one glass-lined baffle connected to the internal wall according to any of the preceding claims.

19. Container according to the preceding claim, **characterized in that** it includes several baffles (14) distributed regularly.

20. Container according to the claims 18 or 19, **characterized in that** it includes several baffles (14) laid out appreciably along a theoretical curve relative to the internal wall (12) of the container (1).

21. Container according to the preceding claim, **characterized in that** the theoretical curve is a helix.

## Patentansprüche

1. Emaillierter Reaktor mit mindestens einem kraftschlüssigen mit der emaillierten Innenwand des Reaktors verbundenen Stromstörer, der mit einem Kühlmittelumlaufsystem ausgestattet werden kann, **gekennzeichnet dadurch, dass** jeder Stromstörer von der Innenwand (12) des Reaktors absteht und durch ein lokales Verbindungsteil (15) mit derselben verbunden ist, das kürzer ist als die Länge jedes Stromstörers, **und dadurch, dass** die Außenfläche des Körpers des Stromstörers und die seines Verbindungsteils emailliert sind, wobei dieses lokale Verbindungsteil jedes Stromstörers quasi unsensibel gegen Ausdehnungen des restlichen Behälters macht und mit der inneren Seitenfläche des Behälters eine Einheit von emaillierten Flächen bildet.

2. Reaktor nach Anspruch 1, **gekennzeichnet dadurch, dass** die lokale Verbindung (15) durch Schweißung an die Innenwand (12) hergestellt wird.

3. Reaktor nach Anspruch 1 oder 2, **gekennzeichnet dadurch, dass** mindestens einer der Stromstörer ein Hohlkörper ist.

4. Reaktor nach dem vorangehenden Anspruch, **gekennzeichnet dadurch, dass** der innere Hohlraum (16) des Stromstörers (14) über seine lokale Verbindung (15) mit dem Fluid des Heiz- oder Kühlsystems des Behälters durch Flüssigkeitsumlauf in Verbindung steht.

5. Reaktor nach einem der Ansprüche 1 oder 2, **gekennzeichnet dadurch, dass** mindestens ein Stromstörer ein Vollkörper ist.

6. Reaktor nach einem der vorangehenden Ansprüche, **gekennzeichnet dadurch, dass** mindestens eine lokale Verbindung (15) etwa auf der halben Höhe des Stromstörers (14) liegt.

7. Reaktor nach einem der Ansprüche 1 bis 6, **gekennzeichnet dadurch, dass** mindestens eine lokale Verbindung (15) in der Nähe von einem der Endpunkte des Stromstörers (14) liegt.

8. Reaktor nach einem der vorangehenden Ansprüche, **gekennzeichnet dadurch, dass** der Körper des Stromstörers eine im allgemeinen flache, einem etwa senkrechten Brett ähnliche Form aufweist, das rechtwinklig zur Innenwand (12) des Behälters (1), dessen Winkel abgerundet sind, liegt.

9. Reaktor nach einem der Ansprüche 1 bis 7, **gekennzeichnet dadurch, dass** der Körper mindestens eines Stromstörers im allgemeinen eine "Hockeyschläger"-Form aufweist.

10. Reaktor nach einem der Ansprüche 1 bis 7, **gekennzeichnet dadurch, dass** der Körper mindestens eines Stromstörers auf der Ebene seines Oberteils, Unterteils und/oder seines seitlichen Endes gebogen ist.

11. Reaktor nach einem der vorangehenden Ansprüche, **gekennzeichnet dadurch, dass** die Querschnittsform des Körpers mindestens eines Stromstörers etwa ein Rechteck ist und mit abgerundeten Rändern versehen ist.

12. Reaktor nach einem der Ansprüche 1 bis 10, **gekennzeichnet dadurch, dass** der Körper mindestens eines Stromstörers konvexe gewölbte Flanken aufweist.

13. Reaktor nach einem der Ansprüche 1 bis 10, **gekennzeichnet dadurch, dass** der Körper von mindestens einem Stromstörer konkave gewölbte Flanken aufweist.

14. Reaktor nach einem der Ansprüche 1 bis 10, **gekennzeichnet dadurch, dass** die Querschnittsform des Körpers mindestens eines Stromstörers mindestens eine Welligkeit auf einer seiner Flanken aufweist.

15. Reaktor nach einem der vorangehenden Ansprüche, **gekennzeichnet dadurch, dass** der Körper mindestens eines Stromstörers kraftschlüssig in etwa geneigter Darstellung zur Längsachse des Behälters mit der angrenzenden Wand verbunden ist.

16. Reaktor nach einem der vorangehenden Ansprüche, **gekennzeichnet dadurch, dass** der Körper von mindestens einem Stromstörer schräg zur Innenwand (12) des Behälters (1) kraftschlüssig verbunden ist.

17. Reaktor nach dem vorangehenden Anspruch, **gekennzeichnet dadurch, dass** ein Ende des Körpers jedes Stromstörers nahe an der angrenzenden Seitenwand liegt und **dadurch, dass** sein gegenüberliegendes Ende von der angrenzenden Seitenwand abgewandt ist.

18. Behälter, der zu emaillieren ist, **gekennzeichnet dadurch, dass** er mindestens einen emaillierten Stromstörer umfasst, der gemäß einem der vorangehenden Ansprüche mit der Innenwand verbunden ist.

19. Behälter nach dem vorangehenden Anspruch, **gekennzeichnet dadurch, dass** er mehrere gleichmäßig verteilte Stromstörer (14) umfasst.

20. Behälter nach Anspruch 18 oder 19, **gekennzeichnet dadurch, dass** er mehrere Stromstörer (14) aufweist, die etwa entlang einer auf der Innenwand (12) des Behälters (1) verlaufenden theoretischen Kurve angeordnet sind.

21. Behälter nach dem vorangehenden Anspruch, **gekennzeichnet dadurch, dass** die theoretische Kurve eine Schraubenlinie ist.
